# EUROPÄISCHE PATENTANMELDUNG

(11) **EP 4 734 543 A1**
(43) Veröffentlichungstag der Anmeldung: **29.04.2026**
(21) Anmeldenummer: 25207243.4
(22) Anmeldetag: 07.10.2025
(51) Int. Cl.: H04Q 9/00, G01D 4/00, H04L 67/12

(54) **VERFAHREN ZUM BETRIEB EINER BIDIREKTIONALEN FUNKKOMMUNIKATION, FUNKKOMMUNIKATIONSNETZ SOWIE FUNKKNOTEN**

(30) Priorität: 24.10.2024 DE 102024131015
(71) Anmelder: Diehl Metering Systems GmbH, 90451 Nürnberg (DE)
(72) Erfinder: FENDT, Charles, 90547 Stein (DE); ADELHARD, Matthias, 91522 Ansbach (DE)
(74) Vertreter: Diehl Patentabteilung

(57) **Zusammenfassung**

Verfahren zum Betrieb einer bidirektionalen Funkkommunikation zwischen einem Funkknoten (100) und einem Gateway (200) in einem mindestens einen, vorzugsweise eine Mehrzahl von, vorzugsweise mittels einer Batterie (103) betriebenen, Funkknoten (100) und mindestens ein Gateway (200) umfassenden Funkkommunikationsnetz (300), in dem die Funkkommunikation in einem IMS-Frequenzband (301) erfolgt und der Funkknoten (100) eine Grundeinstellung des Application-Layer aufweist, bei der eine festgelegte Datenmenge im Uplink vom Funkknoten (100) an das Gateway (200) übertragen wird, wobei durch eine während des Betriebs des Funkknotens (100) aufgrund einer Downlink-Nachricht erfolgende Änderung der Einstellung des Application-Layer im Funkknoten (100) die danach im Uplink vom Funkknoten (100) an das Gateway (200) übertragene Datenmenge im Vergleich zu einem mit der Grundeinstellung des Application-Layer erfolgenden Betrieb des Funkkommunikationsnetzes (300) reduziert wird.

## Beschreibung

Die vorliegende Erfindung betrifft ein Verfahren zum Betrieb einer bidirektionalen Funkkommunikation zwischen einem Funkknoten und einem Gateway gemäß dem Oberbegriff des Anspruchs 1. Die vorliegende Erfindung betrifft ferner ein Funckommunikationsnetz gemäß Anspruch 15 sowie einen Funkknoten zur Verwendung in dem erfindungsgemäßen Verfahren gemäß Anspruch 16.

Vorliegend handelt es sich insbesondere um Funkkommunikationsnetze zur Auslesung von Verbrauchsdaten in entsprechenden Versorgungsnetzen (z.B. Wasser, Gas, Elektrizität oder Wärme) und/oder zum Betrieb von kommunalen Installationseinrichtungen ("Smart City"). Der Funkknoten, z.B. ein Smartmeter, überträgt seine Daten, z.B. Verbrauchsdaten, periodisch zu bestimmten Zeiten an mindestens ein Gateway innerhalb des Funkkommunikationsnetzes. Zudem kann der Funkknoten seine Daten in unterschiedlichen Modes über unterschiedliche Reichweiten versenden. Die Versendung über unterschiedliche Reichweiten kann mit der Sendehäufigkeit gekoppelt sein. Beispielsweise können Daten in einem Short Range Bereich häufiger versendet werden als in einem Long Range Bereich oder in einem Very Long Range Bereich.

Für den Betrieb derartiger Funkkommunikationsnetze gibt es besondere Anforderungen. Zum einen soll der Energieverbrauch der Funkknoten möglichst gering sein, da diese mit einer Batterie, insbesondere einer Longlife-Batterie betrieben werden. Ein Funkknoten sollte daher mindestens 10 Jahre "im Feld" wartungsfrei funktionsfähig sein, ohne dass ein Austausch der Batterie vorgenommen werden muss. Aus diesem Grund senden die Funkknoten nur zu bestimmten Zeiten. Des Weiteren besteht die Gefahr von Störungen des Empfangs durch fremde Störquellen oder "Kollisionen" von Datenpaketen (Telegrammen) während der Übertragung ("Collision in the Air"). Um die Empfangswahrscheinlichkeit zu verbessern, werden aus diesem Grund inhaltsgleiche Uplink-Telegramme, d.h. Telegramme vom Funcknoten zum Gateway mehrfach gesendet. Hierdurch kann die Empfangswahrscheinlichkeit erhöht werden. Allerdings vermehrt dies wiederum den Energieverbrauch im Funkknoten. Erschwert wird der Empfang der Daten im Gateway noch dadurch, dass die Datenübertragung insbesondere in einem schmalbandigen ISM-Frequenzband erfolgt.

Um eine ausreichende Effizienz bei der Datenübertragung zu gewährleisten, bestehen bisherige Maßnahmen darin, die Anzahl bzw. Dichte von Gateways in einem Funkkommunikationsnetz zu erhöhen, um die Empfangsqualität zu steigern. Des Weiteren werden Telegramme im sog. Telegram-Splitting-Verfahren übertragen. Hierbei werden Telegramme in Subpakete aufgeteilt und über unterschiedliche Frequenzen versendet. Im Gateway oder im Headend werden die Informationen des Telegramms aus den einzeln empfangenen Subpakten wieder extrahiert.

Darüber hinaus wurde bisher versucht, die Anzahl von Kollisionen von Datenpaketen durch eine Anpassung der Baudrate bei der Uplink-Datenübertragung zu reduzieren. Dies erfordert jedoch spezielle Downlink-Kommandos an den Funcknoten, also eine Änderung des Transport-Layer.

### Aufgabe der vorliegenden Erfindung

Die Aufgabe der vorliegenden Erfindung besteht darin, ein gattungsgemäßes Verfahren, ein entsprechendes Funkkommunikationsnetz sowie einen hierfür geeigneten Funkknoten mit einer jeweils erhöhten Effizienz zur Verfügung zu stellen.

### Lösung der Aufgabe

Die vorstehende Aufgabe wird durch die Merkmale des Anspruchs 1 gelöst. Bezüglich des Funkkommunikationsnetzes und des Funkknotens wird die vorstehende Aufgabe durch die Merkmale der Ansprüche 15 bzw. 16 gelöst. Zweckmäßige Ausgestaltungen der vorliegenden Erfindung werden in den abhängigen Ansprüchen beansprucht.

Gemäß der Erfindung wird durch eine während des Betriebs des Funkknotens aufgrund einer Downlink-Nachricht erfolgende Änderung der Einstellung des Application-Layer im Funkknoten die danach im Uplink vom Funkknoten an das Gateway zu übertragene Datenmenge (Datenmenge pro Zeiteinheit) im Vergleich zu einem mit der Grundeinstellung des Application-Layer erfolgenden Betrieb des Funkkommunikationsnetzes reduziert. Hierdurch kann die On-Air-Zeit von Uplink-Telegrammen des Funkkommunikationsnetzes vermindert und dadurch die Gefahr von Kollisionen von Datenpaketen reduziert werden, was zu einer Bandbreiten-Optimierung führt. Gleichzeitig kann die Batterie der Funkknoten, bei der es sich vorzugsweise um eine Longlife-Batterie handelt, wirksam geschont werden. Aufgrund der geringeren On-Air-Zeit von Uplink-Telegrammen nach Anpassung des Application-Layer kann die Dichte von Funkknoten in dem Empfangsbereich des Funkkommunikationsnetzes und damit dessen Performance erhöht werden. Aus den oben genannten Effekten resultiert ein besseres SLA (Service Level Agreement). Das SLA bezeichnet den Grad der automatischen Ablesung von Funkknoten im Funkkommunikationsnetz. Beispielsweise bedeutet ein "SLA von 95" dass 95% der Funcknoten automatisch ausgelesen werden können.

Gemäß einer zweckmäßigen Ausgestaltung der vorliegenden Erfindung kann die Änderung der Einstellung des Application-Layer über eine Downlink-Nachricht an den Funkknoten ausgelöst werden. Der Empfang der Downlink-Nachricht stellt somit das Auslöseereignis für die Änderung des Application-Layer im Funkknoten dar.

Gemäß einer zweckmäßigen Ausgestaltung der vorliegenden Erfindung kann die Downlink-Nachricht zur Änderung der Einstellung des Application-Layer im Funcknoten im Headend festgelegt bzw. bereitgestellt werden. Diese Downlink-Nachricht kann vom Headend über das betreffende Gateway an den betreffenden Funcknoten übertragen werden.

Gemäß einer zweckmäßigen Ausgestaltung der vorliegenden Erfindung kann die Reduzierung der Datenmenge durch eine Reduzierung der Häufigkeit der von dem Funkknoten zu versendenden Uplink-Telegrammen und/oder durch eine Reduzierung des Payload bzw. der Länge der von dem Funkknoten zu versendenden Uplink-Telegramme und/oder durch eine Verlängerung der Sendeintervalle für die vom Funkknoten zu versendenden Uplink-Telegramme erfolgen. Bei den "Sendeintervallen" handelt es sich um den jeweiligen zeitlichen Abstand von nacheinander erfolgenden Sendezeitpunkten für Uplink-Telegramme des Funkknotens. Gemäß einer zweckmäßigen Ausgestaltung der vorliegenden Erfindung kann die Reduzierung der im Uplink übertragenen Datenmenge oder des Payloads bzw. der Länge der von dem betreffenden Funkknoten zu übertragenden Uplink-Telegrammen dadurch erfolgen, dass
bei der Grundeinstellung des Application-Layer der Funkknoten im Betrieb Uplink-Telegramme über mindestens zwei unterschiedliche Funkmodes versendet und bei Änderung der Einstellung des Application-Layer mindestens ein Funkmode oder ein Funkmode im Funkknoten deaktiviert wird, und/oder
bei der Grundeinstellung des Application-Layer der Funkknoten Uplink-Telegramme in vorgegebenen Sendeintervallen versendet und
bei Änderung der Einstellung des Application-Layer die Sendeintervalle verlängert werden, und/oder
bei der Grundeinstellung des Application-Layer vom Funkknoten Uplink-Telegramme mit einem vorgegebenen Payload oder einer vorgegebenen Telegramm-Länge versendet werden und bei Änderung der Einstellung des Application-Layer der Payload reduziert bzw. die Telegramm-Länge verkürzt wird.

Gemäß einer zweckmäßigen Ausgestaltung der vorliegenden Erfindung können die mindestens zwei unterschiedlichen Funkmodes unterschiedliche Funkreichweiten und/oder unterschiedliche Sendeintervalle besitzen. Vorzugsweise handelt es sich bei den unterschiedlichen Funkmodes um Modes der OMS ("Open Metering System")-Spezifizierung.

Gemäß einer zweckmäßigen Ausgestaltung der vorliegenden Erfindung können die mindestens zwei unterschiedlichen Funkmodes einen Short Range Mode, einen Middle Range Mode und/oder einen Long Range Mode umfassen.

Gemäß einer zweckmäßigen Ausgestaltung der vorliegenden Erfindung können bei der Grundeinstellung des Application-Layer vom Funkknoten im Uplink-Telegramm Redundanz-bezogene Daten übertragen werden und bei Änderung der Einstellung des Application-Layer im Funkknoten die Redundanz-bezogenen Daten in dem Uplink-Telegramm reduziert oder nicht mehr enthalten sein. Bei den Redundanz-bezogenen Daten kann es sich um zusätzliche Daten handeln, die als zusätzlicher Payload neben aktuellen Daten, z.B. aktuellen Verbrauchsständen, im Payload des Uplink-Telegramms übertragen werden.

Gemäß einer zweckmäßigen Ausgestaltung der vorliegenden Erfindung können die oben genannten Redundanz-bezogenen Daten Verbrauchsstände sein, die an mindestens zwei unterschiedlichen Ablesezeitpunkten (auch "due dates" genannt) abgelesen und im Funkknoten abgespeichert worden sind. Im Grundbetrieb des Application-Layer des Funkknotens werden solche Redundanz-bezogenen Daten über längere Zeiträume (z.B. über drei Monate) wiederholt versendet.

Gemäß einer zweckmäßigen Ausgestaltung der vorliegenden Erfindung kann eine Änderung der Einstellung des Application-Layer im Funkknoten vorgenommen werden, wenn der Funkknoten in der Grundeinstellung des Application-Layer Uplink-Telegramme über mindestens zwei unterschiedliche Funkmodes, vorzugsweise über eine Mehrzahl von Funkmodes sendet und ein Empfang von Uplink-Telegramme mindestens eines der Funkmodes durch das Gateway erfolgt. Da ein Empfang erfolgt, ist es dann nicht mehr unbedingt notwendig, für zukünftige Uplink-Telegramme den oder die zusätzlichen Funkmodes zu nutzen.

Alternativ oder zusätzlich kann die Änderung der Einstellung des Application-Layer im Funkknoten auch vorgenommen werden, wenn der Funkknoten in der Grundeinstellung des Application-Layer Uplink-Telegramme über mindestens zwei unterschiedliche Funkmodes, vorzugsweise über eine Mehrzahl von Funkmodes sendet und Uplink-Telegramme mindestens eines Funkmodes vom Gateway nicht empfangen werden. Die vom Funkknoten zwar versendeten, jedoch vom Gateway nicht empfangenen Uplink-Telegramme können in diesem Fall im Funkknoten deaktiviert werden, sodass lediglich nur noch vom Funkknoten empfangbare Uplink-Telegramme versendet werden.

Zusätzlich oder alternativ kann die Änderung der Einstellung des Application-Layer im Funkknoten vorgenommen werden, wenn der Funkknoten in der Grundeinstellung des Application-Layer Uplink-Telegramme im Regelbetrieb mit Redundanz-bezogenen Daten sendet und das Headend den Empfang der Redundanz-bezogenen Daten bestätigt. Erfolgt somit eine Bestätigung durch das Headend, dass die Redundanz-bezogenen Daten empfangen worden sind, kann die Grundeinstellung des Application-Layer dahingehend angepasst werden, dass die Redundanz-bezogenen Daten nicht mehr versendet werden, sondern solche erst versendet werden, wenn wieder neue Ablesungen stattgefunden haben.

Gemäß einer zweckmäßigen Ausgestaltung der vorliegenden Erfindung kann die Änderung der Einstellung des Application-Layer des Funkknotens zeitlich unbegrenzt sein.

Alternativ kann die Änderung der Einstellung des Application-Layer zeitlich begrenzt sein, wobei im Anschluss daran der Funkknoten wieder in den Regelbetrieb bezüglich seines Application-Layer übergeht.

Die zeitliche Begrenzung der Änderung der Einstellung des Application-Layer kann z. B. durch den zeitlichen Ablauf eines Zeitfensters vorgesehen sein. Ebenso kann der Funkknoten wieder in die Grundeinstellung des Application-Layer übergehen, sofern er ein entsprechendes Downlink-Kommando empfangen hat oder sofern er innerhalb einer vorgegebenen Zeitspanne kein Downlink-Kommando empfangen hat. Ein Wechsel in die Grundeinstellung kann beispielsweise dann erfolgen, wenn der Funkknoten vom Gateway z.B. in einer vorgegebenen Zeitspanne nicht mehr empfangen wird.

Gemäß einer zweckmäßigen Ausgestaltung der vorliegenden Erfindung kann es sich bei dem Gateway um ein ortsfestes Gateway handeln. Die Wahrscheinlichkeit einer erfolgreichen automatischen Auslesung von Funkknoten durch ein ortfestes Gateway ist bereits vergleichsweise hoch, sodass die in einem entsprechenden Funkkommunikationsnetz zu übertragenden Daten durch Anwendung der vorliegenden Erfindung besonders leicht reduziert werden können.

Alternativ kann, bei Bedarf, das erfindungsgemäße Verfahren auch bei einem Funkkommunikationsnetz angewandt werden, bei dem ein mobiles Gateway verwendet wird.

Gemäß einer zweckmäßigen Ausgestaltung der vorliegenden Erfindung kann die Funkkommunikation vorteilhaft in dem 868 MHz-Frequenzband erfolgen. Die dazugehörigen Frequenzkanäle ergeben sich aus Anhang A zu DIN EN 13757-4:2014-02. Hierbei handelt es sich vor allem um schmalbandige Frequenzbereiche, bei denen der Einsatz der vorliegenden Erfindung von besonderem Vorteil ist, da die jeweiligen Bandbreiten hierdurch effizienter genutzt werden können.

Bei einem Funkknoten gemäß der vorliegenden Erfindung kann es sich vorzugsweise um einen Sensorknoten, beispielsweise um ein Smartmeter, oder einen Aktorknoten, beispielsweise einen Aktor zur Betätigung einer Absperreinrichtung (z. B. eines Schiebers oder Ventils) für ein Verbrauchsgut-Versorgungsnetzwerk, oder eine Kombination aus Sensorknoten und Aktor handeln.

Eine Änderung des Application-Layer kann vorzugsweise individuell unterschiedlich für die einzelnen Funkknoten eines Funkkommunikationsnetzes erfolgen. Dies ist möglich, da die Funkknoten im Downlink durch eine spezifische ID individuell ansteuerbar sind.

Die vorliegende Erfindung betrifft des Weiteren ein Funkkommunikationsnetz gemäß Anspruch 15, welches nach dem erfindungsgemäßen Verfahren betrieben wird.

Ferner betrifft die vorliegende Erfindung einen Funkknoten, welcher nach dem erfindungsgemäßen Verfahren betrieben wird.

Gemäß einer zweckmäßigen Ausgestaltung der vorliegenden Erfindung kann die Änderung der Einstellung des Application-Layer in der Firmware des Funkknotens implementiert und über das Downlink-Kommando auslösbar sein.

### Beschreibung der Erfindung anhand von Ausführungsbeispielen

Zweckmäßige Ausgestaltungen der vorliegenden Erfindung werden im Nachgang anhand von Ausführungsbeispielen näher erläutert. Es zeigen:
- Fig. 1: ein Beispiel einer Anordnung mehrerer Funkknoten, eines Gateways sowie des Headends als Bestandteil eines Funkkommunikationsnetzes in stark vereinfachter schematischer Darstellung;
- Fig. 2: einen beispielhaften Funkknoten, der in einem Funkkommunikationsnetz mit unterschiedlichen Funkmodes, die unterschiedliche Reichweiten haben, Uplink-Telegramme versendet;
- Fig. 3: eine erste Variante zur Änderung der Einstellung des Application-Layer im Funkknoten;
- Fig. 4: eine zweite Variante zur Änderung der Einstellung des Application-Layer im Funkknoten;
- Fig. 5: eine dritte Variante zur Änderung der Einstellung des Application-Layer im Funkknoten;
- Fig. 6: eine vierte Variante zur Änderung der Einstellung des Application-Layer im Funkknoten;
- Fig. 7: eine beispielhafte stark vereinfachte Darstellung eines Uplink-Telegramms mit Redundanz-bezogenen Daten;
- Fig. 8: eine beispielhafte stark vereinfachte Darstellung eines Uplink-Telegramms ohne Redundanz-bezogenen Daten;
- Fig. 9: eine beispielhafte Darstellung des Regelbetriebs bei der Grundeinstellung des Application-Layer;
- Fig. 10: eine beispielhafte Darstellung der Änderung der Einstellung des Application-Layer von Fig. 9; sowie
- Fig. 11: eine beispielhafte Darstellung einer weiteren Änderung der Einstellung des Application-Layer von Fig. 9.

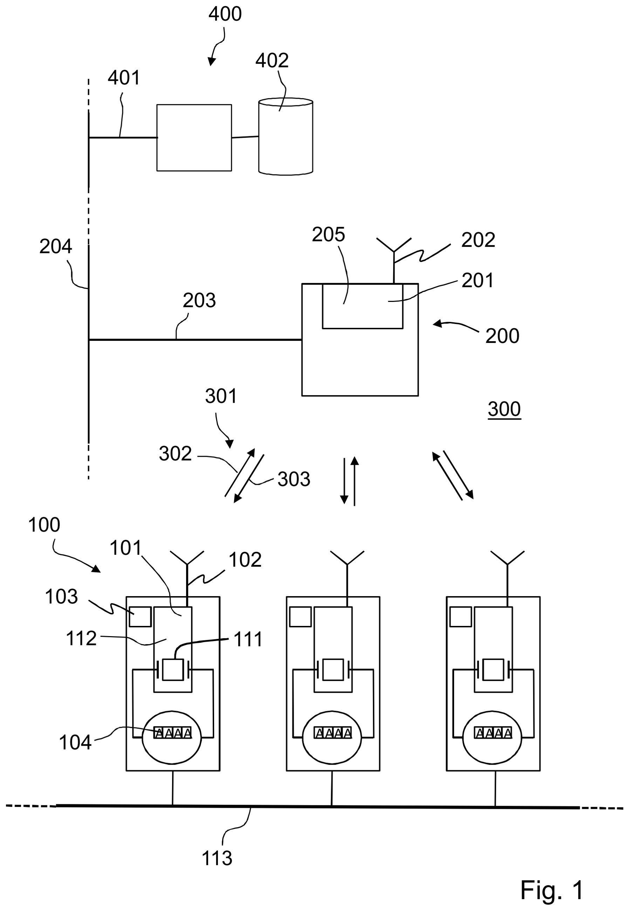

Fig. 1 zeigt in stark vereinfachter schematischer Darstellungsweise ein Verbrauchsgut-Versorgungsnetz 113, bei dem es sich beispielsweise um ein Versorgungsnetz für Wasser, Gas, Wärme oder Elektrizität handeln kann. Zur Feststellung des Verbrauchs an dem Verbrauchsgut des Verbrauchsgut-Versorgungsnetzes 113 durch bestimmte Nutzer sind eine Mehrzahl von Funkknoten 100 in das Verbrauchsgut-Versorgungsnetz 113 installiert. Sie dienen dazu, Verbrauchsmengen über eine geeignete Sensorik festzustellen und per Funk an ein Headend 400 zu übertragen.

In dem Headend 400 werden die Verbrauchsdaten ausgewertet und verwaltet. Hierzu umfasst das Headend 400 einen Server 402, welcher beispielsweise als Webserver oder Cloudserver ausgestaltet sein kann. Das Headend 400 steht über einen geeigneten Kommunikationskanal 401 mit dem Internet 204 bzw. Web in Verbindung.

Die Kommunikation zwischen den einzelnen Funkknoten 100 und dem Headend 400 erfolgt bidirektional in einem IMS-Band 301 über Gateways 200, von denen in Fig. 1 der Übersichtlichkeit halber lediglich eines dargestellt ist. Der jeweilige Funcknoten 100 überträgt hierbei Daten oder Informationen über Uplink-Telegramme 302 per Funk an das jeweilige Gateway 200. Ebenso überträgt das jeweilige Gateway 200 Informationen oder Befehle per Downlink-Telegramm 303 an den jeweiligen Funkknoten 100. Hierzu umfasst der jeweilige Funkknoten 100 einen Transceiver 101 mit Antenne 102 sowie eine Steuerungseinheit 112 zum Betrieb des Funkknotens 100. Ferner weist der Funkknoten 100 eine Zeitreferenzeinrichtung 111 in Form eines Quarzoszillators auf. Zudem kann der Funkknoten 100 über ein eigenes Display 104 verfügen.

Als Energiequelle des Funkknotens 100 dient eine Batterie 103, welche vorzugsweise als sogenannte Longlife-Batterie konzipiert ist. Eine derartige Longlife-Batterie ist dafür vorgesehen, den Funkknoten 100 "im Feld" über einen Zeitraum von mindestens zehn Jahren mit elektrischer Energie zu versorgen.

Das Gateway 200 ist ebenfalls mit einem Transceiver 201 mit Antenne 202 sowie einer Steuerungseinheit 205 ausgestattet. Das Gateway 200 steht über einen Kommunikationskanal 203, wie das Internet 204 bzw. Web, mit dem Headend 400 in einer kommunikationsfähigen Verbindung.

In einem entsprechenden Funkkommunikationsnetz 300 können eine Vielzahl von Funkknoten 100 sowie eine Mehrzahl von Gateways 200 vorgesehen sein, mittels derer Verbrauchsdaten an einem Verbrauchsgut von den einzelnen Funkknoten 100 an das Headend 400 übertragen werden.

Die Qualität dieser automatischen Übertragung bezogen auf das Funkkommunikationsnetz 300 wird in dem Grad des SLA ausgewiesen. Die Verbrauchsdaten werden von den einzelnen Funkknoten 100 lediglich zu bestimmten Zeitpunkten an das Gateway 200 in Form von Uplink-Telegrammen 302 übertragen, um die Batterie 103 zu schonen. Die Abstände dieser Übertragungszeiten werden "Sendeintervalle" genannt. Zwischen den Übertragungszeiten befindet sich der Funkknoten 100 in einem energieschonenden Sleep-Zustand.

Anstelle eines Funkknotens zur Erfassung von Verbrauchsgütern kann es sich bei dem Funkknoten 100 auch um einen Aktorknoten oder um eine Kombination aus Sensorknoten und Aktorknoten handeln.

Der Regelbetrieb der jeweiligen Funkknoten 100 ist durch eine Grundeinstellung des Application-Layer des Funkknoten 100 festgelegt. Hierbei wird eine festgelegte Datenmenge jeweils im Uplink vom Funkknoten 100 an das Gateway 200 übertragen. Der Application-Layer ist eine Abstraktionsschicht, die die im Funcknoten 100 genutzten Kommunikationsprotokolle angibt. Der Application-Layer stellt Funktionen für die Anwendungen im Funkknoten zur Verfügung, wie zum Beispiel die Dateneingabe und Datenausgabe.

Der durch die Grundeinstellung des Application-Layer des Funkknotens 100 festgelegte Regelbetrieb kann unterschiedlich ausgestaltet sein.

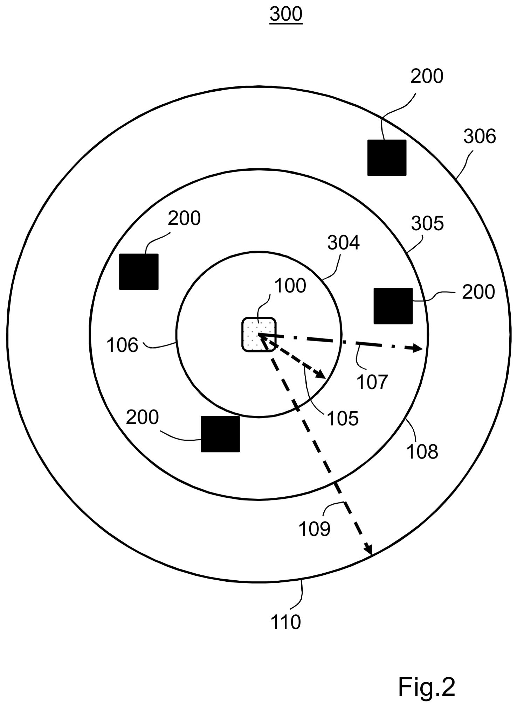

Fig. 2 zeigt beispielhaft einen Funkknoten 100 sowie insgesamt vier in dessen Reichweite befindliche Gateways 200 eines Funkkommunikationsnetzes 300. Gemäß der Grundeinstellung des Application-Layer des Funkknotens 100 versendet dieser Uplink-Telegramme 302 in verschiedenen Modes, z.B. in einem Short Range Mode 105, einem Long Range Mode 107 sowie einem Very Long Range Mode 109. Die unterschiedlichen Modes sind jeweils in Fig. 2 durch unterschiedlich gestrichelte Pfeile gekennzeichnet. Der Short Range Mode 105 hat eine Reichweite 106, der Long Range Mode 107 hat eine Reichweite 108 und der Very Long Range Mode 109 hat eine Reichweite 110, jeweils dargestellt als Kreise in Fig. 2.

Jeder Funkknoten 100 gemäß Fig. 1 sendet somit beispielsweise über diese drei Modes 105, 107, 109 Verbrauchsdaten zu jeweils vorzugsweise unterschiedlichen Sendeintervallen. Dieser Betrieb ist im Application-Layer des jeweiligen Funkknotens 100 fest implementiert. Aufgrund der Vielzahl von Funkknoten 100 in dem Funkkommunikationsnetz 300 sind innerhalb einer Zeiteinheit eine Vielzahl von Uplink-Telegrammen 302 "on Air", was die Gefahr von Kollisionen erhöht und die Empfangswahrscheinlichkeit reduziert. Die Idee der vorliegenden Erfindung besteht darin, die hierdurch erzeugte Datenmenge durch eine Änderung der Einstellung des Application-Layer im Funkknoten 100 zu reduzieren. Hierzu gibt es verschiedene Möglichkeiten.

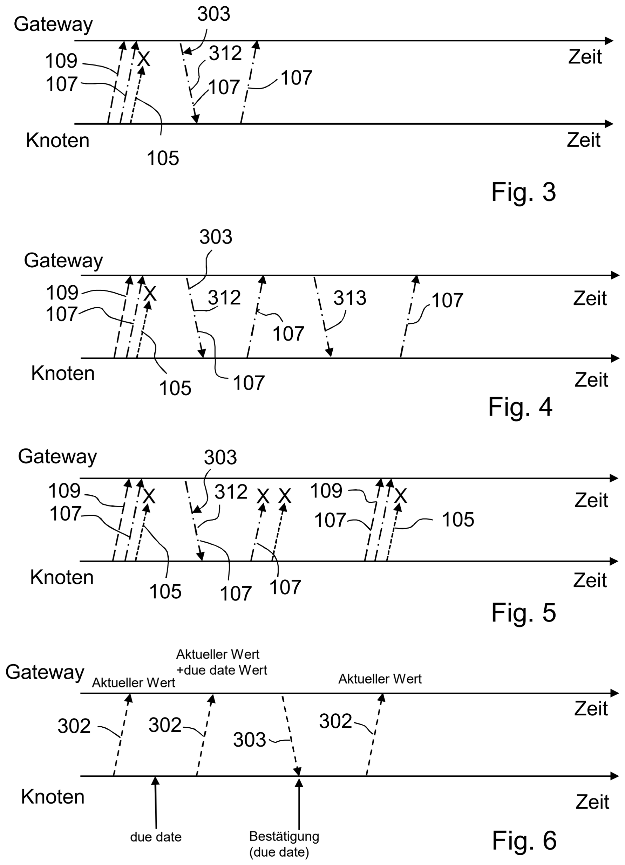

Fig. 3 zeigt eine Möglichkeit, die Datenmenge pro Zeiteinheit bzw. Häufigkeit von Uplink-Telegrammen 302 durch eine Anpassung der Einstellung des Application-Layer im Funkknoten 100 zu ändern. Fig. 3 zeigt auf der linken Seite einzelne Uplink-Telegramme 302 in den unterschiedlichen Modes 105, 107, 109, die sich auch aus Fig. 2 ergeben. Von dem betreffenden Gateway 300 werden lediglich Uplink-Telegramme 302 der Modes 107 sowie 109 nicht jedoch das Uplink-Telegramm 302 des Modes 105 empfangen. Die vom Gateway 300 empfangenen Uplink-Telegramme 302 der Modes 107 sowie 109 werden an das Headend 400 übermittelt. Im Headend 400 wird festgelegt, eine Änderung der Grundeinstellung des Application-Layer im Funkknoten 100 vorzusehen, indem der betreffende Funkknoten 100 lediglich nur noch Uplink-Telegramme 302 des Mode 107 jedoch nicht mehr zusätzlich Uplink-Telegramme 302 der Modes 105 sowie 109 versendet. Die diesbezügliche Änderung der Einstellung des Application-Layer im Funkknoten 100 erfolgt in einem Schritt mit einem Downlink-Telegramm 303 in Form eines einzigen Downlink-Kommandos bzw. Downlink-Telegramms 312 mit der neuen Konfiguration. Die Änderung der Einstellung des Application-Layer des Funkknotens 100 ist in dem Beispiel von Fig. 3 z. B. zeitlich unbegrenzt.

Die Änderung des Application-Layer gemäß Fig. 4 unterscheidet sich von derjenigen gemäß Fig. 3 darin, dass nach dem Downlink-Telegramm 303 in Form eines Downlink-Kommandos bzw. Downlink-Telegramms 312 mit der neuen Konfiguration ein weiteres Downlink-Telegramm 313 mit einer Bestätigung der neuen Konfiguration an den Funkknoten 100 versendet wird. Im Gegensatz zu Fig. 3, bei der es sich um eine Konfigurationsänderung in einem Schritt handelt, erfolgt die Konfigurationsänderung in Fig. 4 somit nach der Verfahrensweise "Versuch und Bestätigung", also in zwei Schritten. Bei erfolgter Bestätigung wird der Betrieb des Funkknotens 100 gemäß der geänderten Einstellung des Application-Layer fortgeführt.

Fig. 5 zeigt eine versuchte Änderung der Einstellung des Application-Layer des Funkknotens 100 gemäß der Verfahrensweise "Versuch und Fehlschlag". Nach dem Empfang des Downlink-Telegramms 312 mit neuer Konfiguration durch den Funkknoten 100 werden Uplink-Telegramme 302 der neuen Konfiguration des selektierten Modes 107 im Gateway 200 z.B. innerhalb einer vorgegebenen Zeit nicht empfangen. Dies führt dazu, dass der betreffende Knoten 100 Uplink-Telegramme 302 wieder in der Grundeinstellung des Application-Layer, in dem vorliegenden Beispiel in den Modes 15, 107 sowie 109, versendet. Das System springt somit in diesem Fall eigenständig auf die Grundeinstellung des Application-Layer zurück.

Fig. 6 zeigt ein weiteres Beispiel der Reduzierung der Datenmenge pro Zeiteinheit nach dem erfindungsgemäßen Verfahren. Nach der Grundeinstellung des Application-Layer wird zu bestimmten Sendezeitpunkten ein aktueller Wert, z.B. ein aktueller Zählerstand, mit einem Uplink-Telegramm 302 an das Gateway 200 übertragen. An einem bestimmten Ablesedatum ("due date") wird der aktuelle Wert, z.B. der Zählerstand an dem betreffenden Ablesetag, gespeichert und zusätzliche mit dem jeweils aktuellen (laufenden) Wert, z.B. Zählerstand, in den Uplink-Telegrammen 302 übertragen. Diese Uplink-Telegramme 302, die den Zählerstand am Ablesedatum beinhalten, werden als Redundanz-bezogene Daten in sich wiederholenden Zeitabständen an das Gateway 200 übertragen. Dies kann aus Redundanzgründen über einen Zeitraum von bis zu drei Monaten der Fall sein. Hat das Headend 400 diese Redundanz-bezogene Daten erhalten erfolgt gemäß der vorliegenden Erfindung im Rahmen eines Downlink-Telegramms 303 eine Bestätigung des Erhalts des Zählerstands zum Ablesedatum ("due date"-Wert), worauf hin eine Änderung der Einstellung des Application Layer in dem betreffenden Funkknoten 100 dahingehend erfolgt, dass im Anschluss daran in seinen Uplink-Telegrammen 302 lediglich der aktuelle Wert übertragen wird. Hierdurch kann eine beträchtliche Einsparung an zu übertragender Datenmenge erreicht werden.

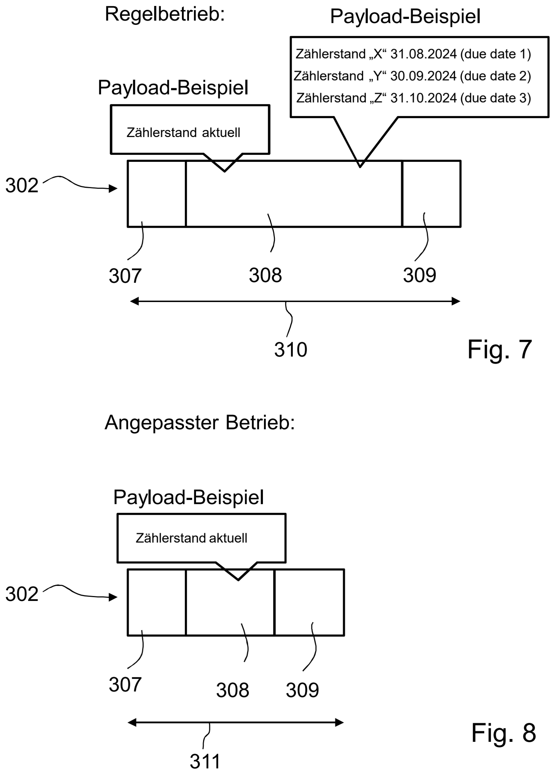

Die Fig. 7 zeigt in Bezug auf die gemäß Fig. 6 beschriebene Verfahrensweise einen beispielhaften Frame eines Uplink-Telegramms 302, welches den aktuellen Zählerstand sowie zusätzlich Zählerstände X, Y, Z zum jeweiligen Ablesedatum ("due date") enthält. Der Frame umfasst z.B. ein Startfeld 307, ein Datenfeld 308 für den Payload sowie ein Kontrollfeld 309. In dem Payload des Datenfeldes 308 befinden sich der aktuelle Zählerstand sowie als Redundanz-bezogene Daten die jeweiligen Zählerstände an drei festgelegten unterschiedlichen Ablesezeitpunkten X, Y, Z und das jeweilige "due date". Diese Ablesezeitpunkte können z. B der jeweils letzte Tag der letzten drei aufeinanderfolgenden Monate sein. Diese Zählerstände werden in den Uplink-Telegrammen 302 zusätzlich mit versendet. Folglich sind sie zusätzlich in dem Datenfeld 308 als zusätzliche Redundanz-bezogene Daten untergebracht. Hierbei handelt es sich um die Grundeinstellung des Application-Layer des Funkknotens. Das Uplink-Telegramms 302 besitzt aufgrund dieses Payloads eine vergrößerte Telegrammlänge 310. Eine periodische Versendung derartiger Uplink-Telegramme 302 belastet daher den Funkkanal erheblich.

Gemäß Fig. 6 wird durch ein Downlink-Telegramm 303 dem Knoten 100 gegenüber bestätigt, dass die Daten bezüglich der "due dates" im Headend 400 angekommen sind und daher nicht mehr zusätzlich als Redundanz-bezogene Daten mit übermittelt werden müssen. Der Knoten 100 ändert somit die Einstellung des Application-Layer dahingehend, dass im Anschluss daran lediglich noch Uplink-Telegramme 302 der in Fig. 8 gezeigten Art übertragen werden. Diese enthalten die Redundanz-bezogenen Daten nicht mehr, sodass deren Telegrammlänge 311 deutlich geringer ist als die Telegrammlänge 310 eines Uplink-Telegramms 302, welches dem Regelbetrieb des Knoten entspricht.

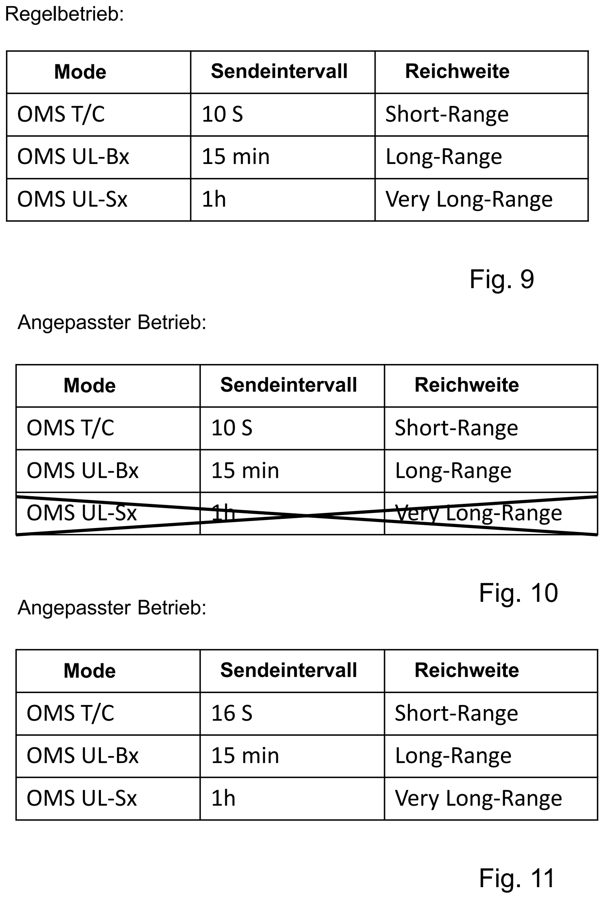

Die Fig. 9 bis 11 zeigen weitere Beispiele zur Reduzierung der zu übertragenden Datenmenge. Fig. 9 zeigt einen Regelbetrieb unter Verwendung der unterschiedlichen OMS Modes (OMS T/C, OMS UL-Bx sowie OMS UL-Sx), die unterschiedliche Sendeintervalle sowie auch unterschiedliche Reichweiten aufweisen. Hierbei handelt es sich um die Grundeinstellung des Application-Layer des Funkknotens 100.

Werden z.B. Uplink-Telegramme 302 vom Gateway 200 in dem OMS UL-Bx Mode in der Long Range Reichweite empfangen, kann für einen angepassten Betrieb der Application-Layer des Funkknotens 100 dahingehend angepasst werden, dass ein Versenden von Uplink-Telegrammen 302 mit dem OMS UL-Sx Mode nicht mehr stattfindet, wie dies in Fig. 10 sinnbildlich dargestellt ist.

Ebenso kann unter den gegebenen Voraussetzungen ein angepasster Betrieb auch dahingehend vorgenommen werden, dass ein Sendeintervall im Vergleich zu der Grundeinstellung des Application-Layer in einem Mode verlängert wird. Beispielsweise ist das Sendeintervall des OMS T/C Mode im Regelbetrieb gemäß Fig. 9 10 Sekunden. Demgegenüber ist es im angepassten Betrieb gemäß Fig. 11 auf 16 Sekunden verlängert worden.

Vorzugsweise handelt es sich bei dem Gateway 200 um ein ortsfest installiertes Gateway. Die vorliegende Erfindung ist jedoch auch geeignet, bei einem mobilen Gateway zum Einsatz zu kommen.

Die vorliegende Erfindung betrifft eine Funkkommunikation in einem IMS-Frequenzband, vgl. Fig. 1. Insbesondere kann die Funkkommunikation in dem 868 MHz-Frequenzband erfolgen. Die dazugehörigen Frequenzkanäle ergeben sich aus Anhang A zu DIN EN 13757-4:2014-02. Hierbei handelt es sich vor allem um schmalbandige Frequenzbereiche.

Die Änderung der Einstellung des Application Layer kann insbesondere in der Firmware des Funkknotens 100 implementiert sein und über ein Downlink-Kommando 303 auslösbar sein.

Eine Änderung des Application-Layer kann vorzugsweise individuell unterschiedlich für die einzelnen Funkknoten 100 eines Funkkommunikationsnetzes erfolgen. Dies ist möglich, da die Funkknoten 100 im Downlink durch eine spezifische ID individuell adressierbar sind.

Abschließend wird darauf hingewiesen, dass auch Unterkombinationen der beschriebenen Merkmale bzw. Ausgestaltungen als erfindungswesentlich angesehen werden.

### BEZUGSZEICHENLISTE

- 100: Funkknoten
- 101: Transceiver
- 102: Antenne
- 103: Batterie
- 104: Display
- 105: Short Range Mode
- 106: Reichweite von Short Range Mode
- 107: Long Range Mode
- 108: Reichweite von Long Range Mode
- 109: Very Long Range Mode
- 110: Reichweite von Very Long Range Mode
- 111: Zeitreferenzeinrichtung
- 112: Steuerungseinheit
- 113: Verbrauchsgut-Versorgungsnetz

- 200: Gateway
- 201: Transceiver
- 202: Antenne
- 203: Kommunikationskanal
- 204: Internet
- 205: Steuerungseinheit

- 300: Funkkommunikationsnetz
- 301: IMS-Frequenzband
- 302: Uplink-Telegramm
- 303: Downlink-Telegramm
- 304: Short Range Mode
- 305: Middle Range Mode
- 306: Long Range Mode
- 307: Startfeld
- 308: Datenfeld
- 309: Kontrollfeld
- 310: Telegrammlänge
- 311: Telegrammlänge
- 312: Downlink-Telegramm mit neuer Konfiguration
- 313: Downlink-Telegramm mit Bestätigung der neuen Konfiguration

- 400: Headend
- 401: Kommunikationskanal
- 402: Server

## Patentansprüche

1. Verfahren zum Betrieb einer bidirektionalen Funkkommunikation zwischen einem Funkknoten (100) und einem Gateway (200) in einem mindestens einen, vorzugsweise eine Mehrzahl von, vorzugsweise mittels einer Batterie (103) betriebenen, Funkknoten (100) und mindestens ein Gateway (200) umfassenden Funkkommunikationsnetz (300), in dem die Funkkommunikation in einem IMS-Frequenzband (301) erfolgt und der Funkknoten (100) eine Grundeinstellung des Application-Layer aufweist, bei der eine festgelegte Datenmenge im Uplink vom Funkknoten (100) an das Gateway (200) übertragen wird,
**dadurch gekennzeichnet, dass**
durch eine während des Betriebs des Funkknotens (100) aufgrund einer Downlink-Nachricht erfolgende Änderung der Einstellung des Application-Layer im Funkknoten (100) die danach im Uplink vom Funkknoten (100) an das Gateway (200) übertragene Datenmenge im Vergleich zu einem mit der Grundeinstellung des Application-Layer erfolgenden Betrieb des Funckommunikationsnetzes (300) reduziert wird.

2. Verfahren nach Anspruch 1, **dadurch gekennzeichnet, dass** die Änderung der Einstellung des Application-Layer über eine Downlink- Nachricht (303) an den Funkknoten (100) ausgelöst wird.

3. Verfahren nach Anspruch 1 oder 2, **dadurch gekennzeichnet, dass** die Downlink-Nachricht zur Änderung der Einstellung des Application-Layer im Funkknoten (100) im Headend (400) festgelegt wird.

4. Verfahren nach den vorhergehenden Ansprüchen, **dadurch gekennzeichnet, dass** die Reduzierung der Datenmenge durch
eine Reduzierung der Häufigkeit von Uplink-Telegrammen (302) und/oder
eine Reduzierung des Payload bzw. der Länge von Uplink-Telegrammen (302) und/oder
eine Verlängerung der Sendeintervalle für Uplink-Telegramme (302) des Funkknoten (100) erfolgt.

5. Verfahren nach den vorhergehenden Ansprüchen, **dadurch gekennzeichnet, dass** die Reduzierung der im Uplink übertragenen Datenmenge oder des Payload bzw. der Länge von Uplink-Telegrammen (302) dadurch erfolgt, dass
bei der Grundeinstellung des Application-Layer der Funkknoten (100) im Betrieb Uplink-Telegramme über mindestens zwei unterschiedliche Funkmodes versendet und bei Änderung der Einstellung des Application-Layer ein Funkmode bzw. mindestens ein Funkmode im Funkknoten (100) deaktiviert wird, und/oder
bei der Grundeinstellung des Application-Layer der Funkknoten (100) Uplink-Telegramme in vorgegebenen Sendeintervallen versendet und
bei Änderung der Einstellung des Application-Layer die Sendeintervalle verlängert werden, und/oder
bei der Grundeinstellung des Application-Layer vom Funkknoten (100) Uplink-Telegramme mit einem vorgegebenen Payload oder einer vorgegebenen Telegramm-Länge versendet werden und bei Änderung der Einstellung des Application-Layer der Payload reduziert bzw. die Telegramm-Länge verkürzt wird.

6. Verfahren nach den Anspruch 5, **dadurch gekennzeichnet, dass** die mindestens zwei unterschiedlichen Funkmodes (304, 305, 306) unterschiedliche Funkreichweiten (106, 108, 110) und/oder unterschiedliche Sendeintervalle besitzen.

7. Verfahren nach den Anspruch 6, **dadurch gekennzeichnet, dass** die mindestens zwei unterschiedlichen Funkmodes als unterschiedliche Funkreichweiten (106, 108, 110) einen Short Range Mode (304) einen Middle Range Mode (305) und/oder einen Long Range Mode (306) umfassen.

8. Verfahren nach den vorhergehenden Ansprüchen, **dadurch gekennzeichnet, dass** bei der Grundeinstellung des Application-Layer vom Funcknoten (100) im Uplink-Telegramm (302) Redundanz-bezogene Daten übertragen werden, und bei Änderung der Einstellung des Application-Layer im Funkknoten (100) die Redundanz-bezogenen Daten in dem Uplink-Telegramm (302) reduziert oder nicht mehr enthalten sind.

9. Verfahren nach Anspruch 8, **dadurch gekennzeichnet, dass** die Redundanz-bezogenen Daten Verbrauchsstände an mindestens zwei unterschiedlichen Ablesezeitpunkten ("due dates") sind.

10. Verfahren nach den vorhergehenden Ansprüchen, **dadurch gekennzeichnet, dass** die Änderung der Einstellung des Application-Layer im Funcknoten (100) vorgenommen wird, wenn
der Funkknoten (100) in der Grundeinstellung des Application-Layer Uplink-Telegramme (302) über mindestens zwei unterschiedliche Funkmodes, vorzugsweise über eine Mehrzahl von Funkmodes (303, 304, 305) sendet und ein Empfang von Uplink-Telegramme (302) mindestens eines der Funkmodes durch das Gateway (200) erfolgt und/oder
der Funkknoten (100) in der Grundeinstellung des Application-Layer Uplink-Telegramme (302) über mindestens zwei unterschiedliche Funkmodes, vorzugsweise über eine Mehrzahl von Funkmodes (303, 304, 305) sendet und Uplink-Telegramme (302) mindestens eines Funkmodes vom Gateway (200) nicht empfangen werden, und/oder
der Funkknoten (100) in der Grundeinstellung des Application-Layer Uplink-Telegramme (302) im Regelbetrieb mit Redundanz-bezogenen Daten sendet und das Headend (400) den Empfang der Redundanz-bezogenen Daten bestätigt.

11. Verfahren nach den vorhergehenden Ansprüchen, **dadurch gekennzeichnet, dass** die Änderung der Einstellung des Application-Layer des Funkknotens (100) zeitlich unbegrenzt ist oder die Änderung der Einstellung des Application-Layer zeitlich begrenzt ist und der Funkknoten (100) im Anschluss daran wieder in den Regelbetrieb übergeht.

12. Verfahren nach Anspruch 11, **dadurch gekennzeichnet, dass** der Funkknoten (100) wieder in den Regelbetrieb übergeht, sofern er ein entsprechendes Downlink-Kommando empfangen hat oder sofern er innerhalb einer vorgegebenen Zeitspanne kein Downlink-Kommando empfangen hat.

13. Verfahren nach den vorhergehenden Ansprüchen, **dadurch gekennzeichnet, dass** es sich bei dem Gateway (200) um ein ortsfestes oder ein mobiles Gateway handelt.

14. Verfahren nach den vorhergehenden Ansprüchen, **dadurch gekennzeichnet, dass** die Funkkommunikation in dem 868 MHz Frequenzband erfolgt.

15. Funkkommunikationsnetz (300) mit
mindestens einem, vorzugsweise mit einer Mehrzahl von, vorzugsweise mittels einer Batterie (103) betriebenen, Funkknoten (100),
mindestens einem Gateway (200),
einem Headend (400),
wobei zwischen dem mindestens einem Funkknoten (100) und dem mindestens einen Gateway (200) ein Verfahren zum Betrieb einer bidirektionale Funkkommunikation gemäß den vorhergehenden Ansprüche stattfindet.

16. Funkknoten (100), **dadurch gekennzeichnet, dass** er nach einem Verfahren zum Betrieb einer bidirektionalen Funkkommunikation gemäß den vorhergehenden Ansprüche 1 bis 14 betrieben wird.

17. Funkknoten (100 nach Anspruch 16, **dadurch gekennzeichnet, dass** die Änderung der Einstellung des Application-Layer in der Firmware des Funkknoten (100) implementiert ist und über ein Downlink-Kommando auslösbar ist.
